# EUROPEAN PATENT SPECIFICATION

(11) **EP 2 418 533 B1**
(45) Date of publication and mention of the grant of the patent: **02.11.2016**
(21) Application number: 11166528.7
(22) Date of filing: 18.05.2011
(51) Int. Cl.: G02B 27/22, H04N 13/04

(54) **Shutter glasses capable of changing polarization direction thereof, and associated control method and transmitter**
Zum Wechsel der Polarisationsrichtung fähige Shutterbrille und zugehöriges Steuerungsverfahren und Sender
Verres d'obturateur capables de modifier leur direction de polarisation et procédé de commande et émetteur/récepteur correspondants

(30) Priority: 06.08.2010 TW 099126266
(43) Date of publication of application: 15.02.2012
(73) Proprietor: Acer Incorporated, New Taipei City 221 (TW)
(72) Inventor: Ko, Chueh-Pin, 221, New Taipei City (TW); Su, Dong-Hsing, 221, New Taipei City (TW)
(74) Representative: Becker Kurig Straus

(56) References cited:
- WO-A1-2010/055936
- US-A- 6 057 811
- US-A1- 2010 194 857

## Description

This invention relates to a pair of shutter glasses, capable of watching a plurality of different types of display apparatuses, and a related control method thereof, according to the pre-characterizing clauses of claims 1 and 10.

3D glasses operate by alternating between a left-eye of the glasses receiving an image, and the right-eye receiving the image. These alternate images are superimposed together by the brain, resulting in a 3D image being perceived by a user. 3D glasses utilize synchronization information to control the duty cycle of the 3D glasses, such that the switching frequency can be adapted to enhance the viewing experience. U.S. Patent No. 6,057,811 discloses a pair of 3D glasses which include a control chip that communicates with a transmitter, for determining the synchronization information of the 3D display. The control chip can then utilize this synchronization information to adjust the duty cycle of the 3D glasses.

U.S. Patent Application No. 2010/194,857 discloses a pair of 3D glasses which can determine a type of display apparatus, and therefore access the synchronization information in order to provide accurate synchronization between the display and the glasses. World

Patent Application No. 2010/055936 discloses a display system for 3D images which utilizes a polarization shield smectic liquid crystal display (PSS-LCD), which provides fast switching times and can therefore respond much faster than conventional displays for alternating between left-eye and right-eye images.

As disclosed above, a conventional pair of 3D glasses is only suitable for a display apparatus whose image light output has a polarization directions at 135 degrees, and cannot be used by a user to watch display apparatuses whose image light outputs have other polarization directions, e.g. TN (Twisted Nematic) liquid crystal display (LCD) apparatus whose

polarization direction is at 45 degrees, IPS (In-plane Switching) LCD apparatus whose polarization direction is at 0 degree, VA (Vertical Alignment) LCD apparatus whose polarization direction is at 90 degrees, etc. Thus, since the pair of 3D glasses may not be suitable for all types of display apparatuses, manufacturers have to redesign the pair of 3D glasses according to each display apparatus type, and the production cost is increased inevitably. Besides, one user has to buy a plurality pairs of 3D glasses suitable for watching a plurality of types of display apparatuses, resulting in unnecessary waste.

According to a second aspect of the present invention, a transmitter comprises an interface circuit, a control unit and a transmitting unit. The interface circuit receives the information of the display apparatus. The control unit is coupled to the interface circuit, and implemented for generating a control signal according to the information, wherein the control signal sets the pair of shutter glasses for selecting one of a plurality of operation modes. The transmitting unit is coupled to the control unit, and implemented for transmitting the control signal to the pair of shutter glasses.

According to a third aspect of the present invention, a claimed method for controlling a pair of shutter glasses comprises: providing information of the display apparatus, wherein the information comprises at least one of a type of the display apparatus, a product name of the display apparatus, a corresponding value of the display apparatus, and a polarization direction of an image light output generated by the display apparatus; and transmitting the information to the pair of glasses to set the pair of shutter glasses.

In the following, the invention is further illustrated by way of example, taking reference to the following drawings. Thereof:
- FIG. 1: is a diagram illustrating a structure of a pair of conventional three-dimensional glasses and related optical theory thereof;
- FIG. 2: is a diagram illustrating a pair of shutter glasses according to an exemplary embodiment of the present invention;
- FIG. 3: is a diagram illustrating a shutter lens shown in FIG. 1 according to an exemplary embodiment of the present invention;
- FIG. 4: is a diagram illustrating that a control chip applies voltages on the LC layer when the polarization directions of image light outputs generated by the display apparatuses are respectively at 0 degree, 45 degrees, 90 degrees, 135 degrees;
- FIG. 5: is a diagram illustrating a pair of shutter glasses according to another exemplary embodiment of the present invention;
- FIG. 6: is a diagram illustrating a shutter lens shown in FIG. 5 according to an exemplary embodiment of the present invention;
- FIG. 7: is a diagram illustrating that a control chip applies voltages on the first LC layer and the second LC layer shown in FIG. 6 when the polarization directions of image light outputs generated by the display apparatuses are respectively at 0 degree, 45 degrees, 90 degrees and 135 degrees;
- FIG. 8: is a diagram illustrating a pair of shutter glasses according to another exemplary embodiment of the present invention;
- FIG. 9: is a diagram illustrating that a transmitter is employed to control an operation mode of a pair of glasses according to an exemplary embodiment of the present invention;
- FIG. 10: is a diagram illustrating a structure of the transmitter shown in FIG. 9;
- FIG. 11: is a diagram illustrating a pair of shutter glasses with a control panel according to another exemplary embodiment of the present invention;
- FIG. 12: is a diagram illustrating a control system for controlling a pair of shutter glasses according to an exemplary embodiment of the present invention; and
- FIG. 13: is a flowchart illustrating a method for controlling a pair of shutter glasses according an exemplary embodiment of the present invention.

### Detailed Description

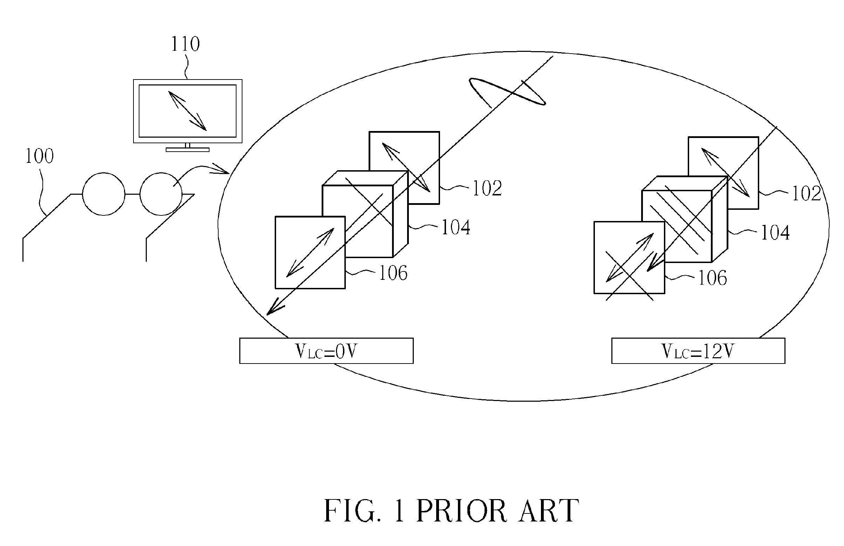

Please refer to FIG. 1, which is a diagram illustrating a structure of a pair of conventional three-dimensional (3D) glasses 100 and related optical theory thereof. As shown in FIG. 1, the pair of 3D glasses 100 is utilized for watching a display apparatus 110 whose image light output has a polarization direction at 135 degrees. Each lens of the pair of 3D glasses 100 includes a front polarizer 102, a liquid crystal (LC) layer 104 and a back polarizer 106. Regarding the operation of the pair of 3D glasses 100, the voltage V_{LC} on the LC layer 104 determines whether light is allowed to transmit through the lens. For example, when the voltage V_{LC} on the LC layer 104 is 0V, light transmitted through the LC layer 104 has its polarization direction changed to 45 degrees, and then transmits through the back polarizer 106 successfully; on the contrary, when the voltage V_{LC} on the LC layer 104 is 12V, light transmitted through the LC layer 104 has its polarization direction still maintained at 135 degrees, and fails to transmit through the back polarizer 106. Therefore, by providing control voltages on LC layers corresponding to the left-eye lens and the right-eye lens alternately, the pair of 3D glasses 100 may let the user's left eye and right eye respectively receive suitable images, leading to superimposed images regarded as stereo images in the user's brain.

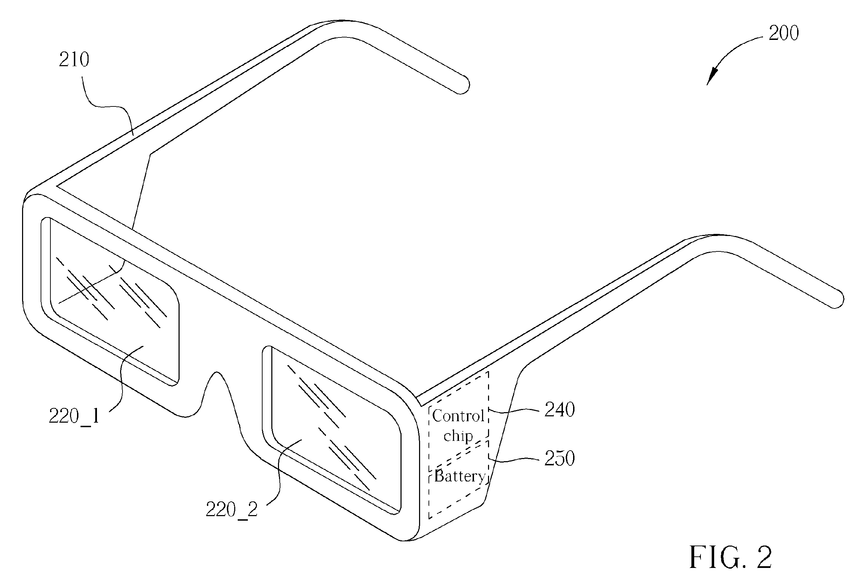

Please refer to FIG. 2, which is a diagram illustrating a pair of shutter glasses 200 according to an exemplary embodiment of the present invention. As shown in FIG. 2, the pair of shutter glasses 200 includes a frame 210, two shutter lenses 220_1, 220_2, a control chip 240 disposed in the frame 210, and a battery 250, wherein the battery 250 supplies power to the control chip 240, and the control chip 240 is configured to control the voltage applied to LC layers in the two LC lenses 220_1, 220_2.

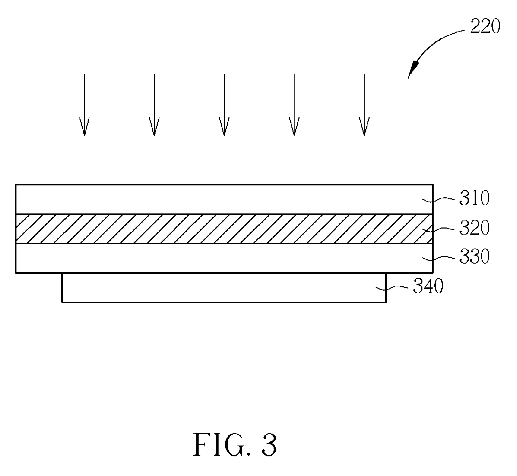

Please refer to FIG. 3, which is a diagram illustrating a shutter lens 220 according to an exemplary embodiment of the present invention. The shutter lens 220 may be either of the two shutter lenses 220_1, 220_2 shown in FIG. 2. As shown in FIG. 3, the shutter lens 220 includes a first transparent conductive glass 310, an LC layer 320, a second transparent conductive glass 330 and a polarizer 340.

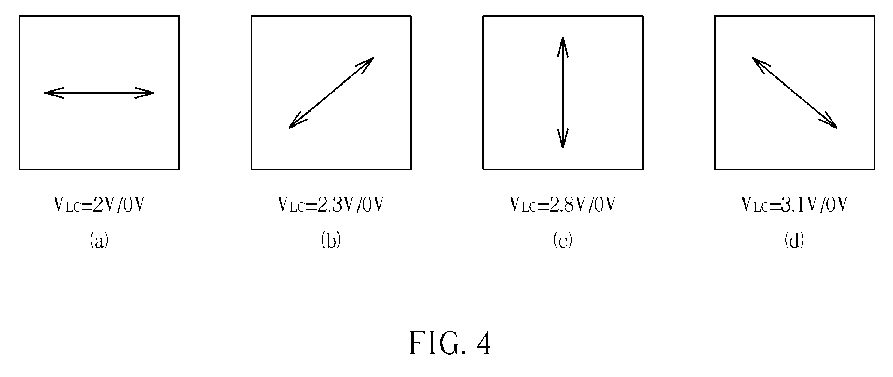

Regarding the operation of the pair of shutter glasses 200, the control chip 240 is configured to select one of a plurality of voltage values according to the polarization direction of the image light output generated by a display apparatus, and the selected voltage value is utilized as the voltage applied to each of the two shutter lenses 220_1, 220_2, wherein the voltage values respectively correspond to a plurality of different types of display apparatuses whose image light outputs have different polarization directions. For example, please refer to the sub-diagrams (a)-(d) of FIG. 4. When the polarization directions of image light outputs generated by display apparatuses are respectively at 0 degree, 45 degrees, 90 degrees, and 135 degrees, the control chip 240 is configured to respectively control the voltage V_{LC} across the LC layer 320 by 2V/0V 2.3V/0V, 2.8V/0V and 3.1V/0V. That is, when the polarization direction of an image light output generated by a display apparatus is at 0 degree, the control chip 240 is configured to control the voltage V_{LC} across the LC layer 320 to switch between 2V and 0V, when the polarization direction of an image light output generated by a display apparatus is at 45 degrees, the control chip 240 is configured to control the voltage V_{LC} across the LC layer 320 to switch between 2.3V and 0V, and so forth. So, shutter lenses 220_1, 220_2 may correctly and effectively allow light to transmit therethrough and prevent light from transmitting therethrough, thereby allowing user's left eye and right eye to respectively receive suitable images and resulting in superimposed images regarded as stereo images in the user's brain. In other words, in this exemplary embodiment, the control chip 240 is configured to directly control the rotation degree of the image light within the LC layers 320 via supplying different voltages to the LC layers 320 of the shutter lenses 220_1, 220_2 for different types of display apparatuses whose image light outputs have different polarization directions. Moreover, it should be noted that the polarization directions of the image light outputs generated by the display apparatuses shown in FIG. 4 and the corresponding voltage V_{LC} thereof are for illustrative purposes only, and are not meant to be limitations to the present invention.

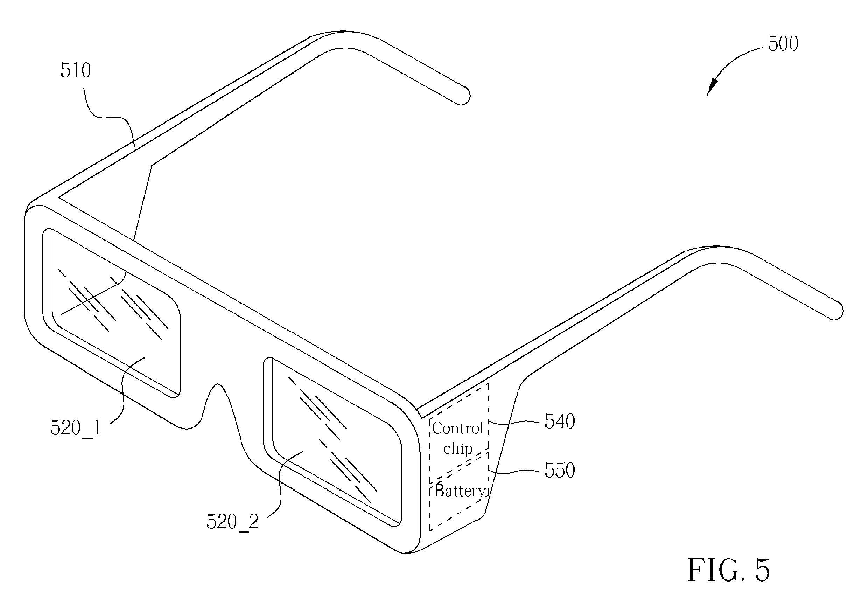

Please refer to FIG. 5, which is a diagram illustrating a pair of shutter glasses 500 according to another exemplary embodiment of the present invention. As shown in FIG. 5, the pair of shutter glasses 500 includes a frame 510, two shutter lenses 520_1, 520_2, a control chip 540 disposed in the frame 510, and a battery 550, wherein the battery 550 supplies power to the control chip 540, and the control chip 540 is configured to control the voltages on the LC layers of the two shutter lenses 520_1, 520_2.

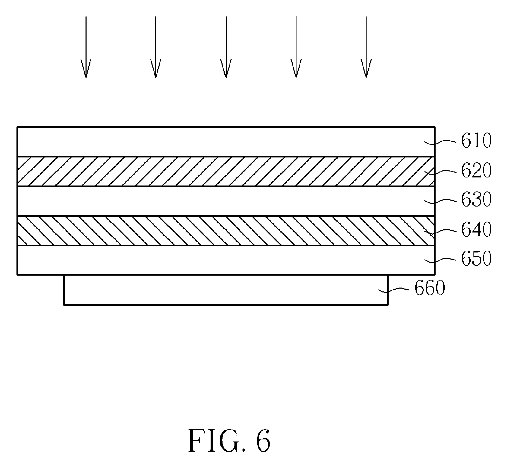

Please refer to FIG. 6, which is a diagram illustrating a shutter lens 520 according to an exemplary embodiment of the present invention. The shutter lens 520 may be either of the two shutter lenses 520_1, 520_2 shown in FIG. 5. As shown in FIG. 6, the shutter lens 520 includes a first transparent conductive glass 610, a first LC layer 620, a second transparent conductive glass 630, a second LC layer 640, a third transparent conductive glass 650 and a polarizer 660. Besides, in another exemplary embodiment of the present invention, the second transparent conductive glass 630 may also be composed of two glasses.

Please note that the transparent conductive glass mentioned above may be an optional component. Therefore, in other exemplary embodiments, the transparent conductive glass may be omitted or replaced by a similar component, and the number and material thereof are not limited.

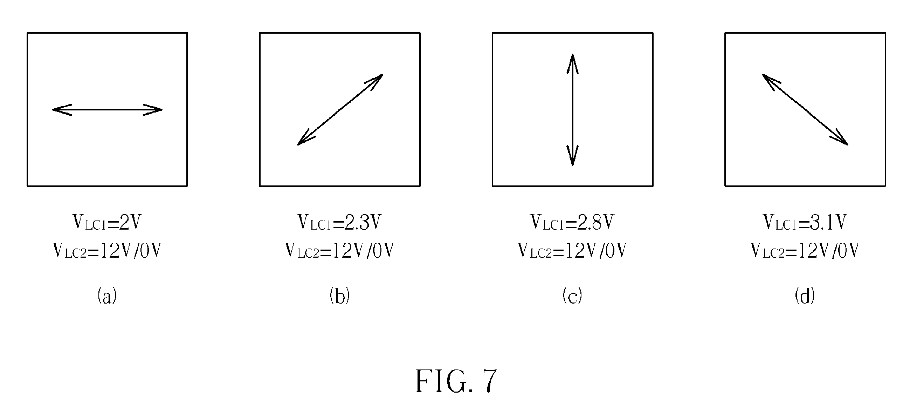

Regarding the operation of the pair of shutter glasses 500, the control chip 540 is configured to select one of a plurality of voltage values according to a polarization direction of an image light output generated by a display apparatus, and the selected voltage value is arranged to be the voltage applied to the first LC layer 620 in each of the shutter lenses 520_1, 520_2, wherein the voltage values respectively correspond to a plurality of different types of display apparatuses whose image light outputs have different polarization directions. Moreover, the control chip 540 is further configured to control the voltage applied to the second LC layer 640 in each of the shutter lenses 520_1, 520_2 to thereby control if the polarization direction of the incident light should have a 90-degree rotation. For example, please refer to sub-diagrams (a)-(d) of FIG. 7. When the polarization directions of the image light outputs generated by the display apparatuses are respectively at 0 degree, 45 degrees, 90 degrees, and 135 degrees, the control chip 540 is configured to respectively control the voltage V_{LC1} across the first LC layer 620 by 2V, 2.3V, 2.8V and 3.1V, and controls the voltage V_{LC2} across the second LC layer 640 by 12V/0V. That is, when the polarization direction of the image light output generated by a display apparatus is at 0 degree, the control chip 540 is configured to control the voltage V_{LC1} across the first LC layer 620 by a constant voltage level 2V (i.e., no voltage switching operation is performed), and control the voltage V_{LC2} across the second LC layer 640 to switch between 12V and 0V, when the polarization direction of the image light output generated by a display apparatus is at 45degrees, the control chip 540 is configured to control the voltage V_{LC1} across the first LC layer 620 by a constant voltage level 2.3V (i.e., no voltage switching operation is performed), and control the voltage V_{LC2} across the second LC layer 640 to switch between 12V and 0V, and so forth. So, the shutter lenses 520_1, 520_2 may correctly and effectively allow light to transmit therethrough or prevent light from transmitting therethrough, thereby allowing the user's left eye and right eye to respectively receive suitable images and resulting in superimposed images regarded as stereo images in the user's brain. In other words, the control chip 540 is configured to directly control the rotation degree of image light within the first LC layer 620 by supplying different voltages to the first LC layers 620 of the shutter lenses 520_1, 520_2 for different types of display apparatuses whose image light outputs have different polarization directions. In this way, after the image light has transmitted through the first LC layer 620, the polarization direction thereof is parallel with or perpendicular to the polarizer 660 shown in FIG. 6. Moreover, it should be noted that the polarization directions of the image light outputs generated by the display apparatuses shown in FIG. 7 and related voltages V_{LC1}, V_{LC2} are for illustrative purposes only, and are not meant to be limitations of the present invention.

Compared with the pair of conventional 3D glasses 100 shown in FIG. 1, the pair of shutter glasses 200 shown in FIG. 2 and the pair of shutter glasses 500 shown in FIG. 5 are suitable for a plurality of different types of display apparatuses whose image light outputs have different polarization directions. So, manufacturers do not have to redesign the pair of 3D glasses according to each display apparatus type, and the production cost is saved accordingly. Besides, to watch different types of display apparatuses, one user only needs to buy one pair of 3D glasses, which prevents the user for spending extra money on buying the pair of shutter glasses.

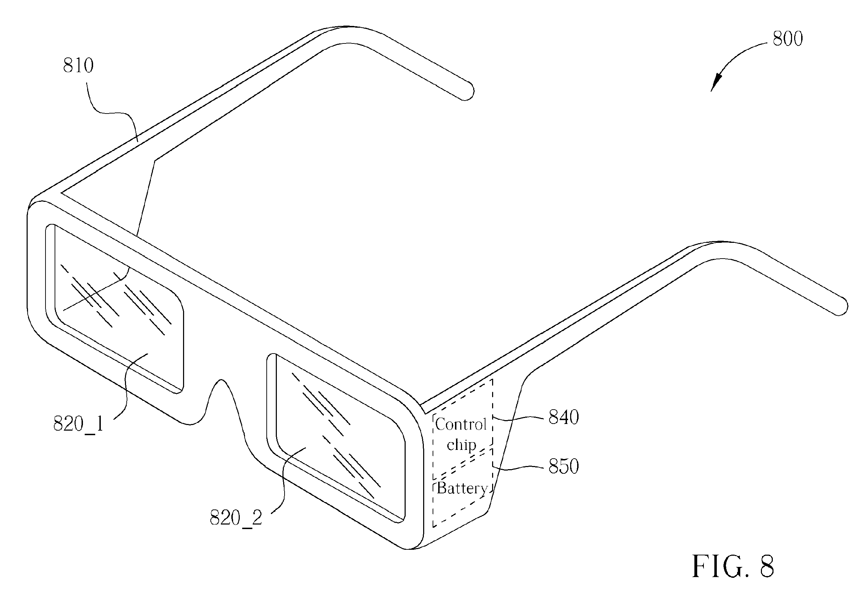

Please refer to FIG. 8, which is a diagram illustrating a pair of shutter glasses 800 according to another exemplary embodiment of the present invention. As shown in FIG. 8, the pair of shutter glasses 800 includes a frame 810, two shutter lenses 820_1, 820_2, a control chip 840 disposed in the frame 810, and a battery 850, wherein the battery 850 supplies power to the control chip 840, and the control chip 840 is configured to control voltages applied to the LC layers in the two shutter lenses 820_1, 820_2.

Regarding the operation of the pair of shutter glasses 800, the control chip 840 is configured to determine a driving manner (on/off switching mode) for controlling the two shutter lenses 820_1, 820_2 according to a type of a display apparatus. For example, the control chip 840 is configured to select one of a plurality of on/off switching frequencies according to a type of the display apparatus to control the on/off statuses of the two shutter lenses 820_1, 820_2, or selects at least one of a plurality of on/off time lengths, on/off cycles, on/off times, and on/off ratios according to the type of the display apparatus to control the on/off statuses of the two shutter lenses 820_1, 820_2.

An operation mode of the aforementioned pair of shutter glasses 200 shown in FIG. 2, the aforementioned pair of shutter glasses 500 shown in FIG. 5, the aforementioned pair of shutter glasses 800 shown in FIG. 8 or any other pair of glasses capable of adjusting the polarization direction may be controlled by a signal generated from a transmitter or may be manually controlled by the user. The detailed description is given as below.

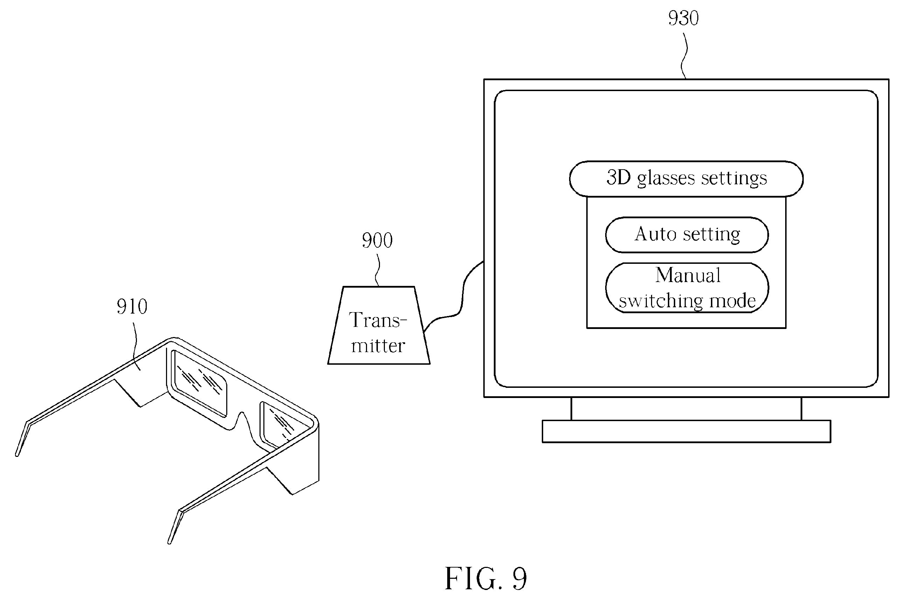

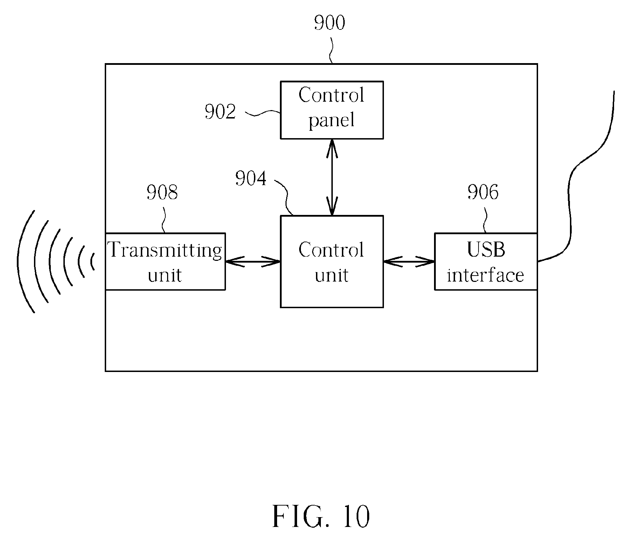

Please refer to FIG. 9, which is a diagram illustrating that a transmitter 900 is employed to control an operation mode of a pair of shutter glasses 910 according to an exemplary embodiment of the present invention. As shown in FIG. 9, the transmitter 900 is connected to a display apparatus 930 through a universal serial bus (USB) connection cable. The pair of shutter glasses 910 has a plurality of operation modes, and the operation modes respectively correspond to a plurality of types of display apparatuses. That is, the pair of shutter glasses 910 may be the pair of shutter glasses 200 shown in FIG. 2, the pair of shutter glasses 500 shown in Fig. 5, the pair of shutter glasses 800 shown in FIG. 8, or any other pair of glasses capable of adjusting the polarization direction. Besides, please also refer to FIG. 10, which is a diagram illustrating the structure of the transmitter 900. The transmitter 900 includes a control panel 902, a control unit 904, an interface circuit (a USB interface 906 in this exemplary embodiment) and a transmitting unit 908, wherein the control panel 902 may be any operating panel which allows the user to select an operation mode manually. However, the control panel 902 may be optional. That is, in some exemplary embodiments illustrated below, the control panel 902 may be removed from the transmitter 900 without affecting the operation of the present invention. Besides, in other exemplary embodiments of the present invention, the transmitter 900 may be connected to the display apparatus via other connecting/transmitting modes, and the USB interface 906 may be replaced by other standard interface circuit. In the following illustration directed to using the transmitter 900 to control the operation mode of the pair of shutter glasses 910, only operation modes respectively corresponding to a plurality of types of display apparatuses whose image light outputs have different polarization directions are illustrated.

Regarding the operation of the transmitter 900, the control unit 904 is configured to generate a control signal by searching a look-up table according to a user input from the control panel 902, and then the transmitting unit 908 transmits the control signal to the pair of shutter glasses 910 via infrared transmission, wireless transmission, ZigBee transmission, WiFi transmission, Bluetooth transmission, ultrawideband (UWB) transmission, DLP light signal transmission, etc. A control chip (not shown) in the pair of shutter glasses 910 is configured to select one of the operation modes to set the pair of shutter glasses 910 according to the information carried by the control signal, such that the pair of shutter glasses 910 is suitable for viewing the image light output generated by the display apparatus 930.

Moreover, in another exemplary embodiment of the present invention, the transmitter 900 may also analyze information from the display apparatus 930, such as extended display identification data (EDID), USB description or any other information that has identification information of the display apparatus 930, and transmits a proper control signal to the pair of shutter glasses 910 according to the information. Therefore, the control chip in the pair of shutter glasses 910 is configured to select one of the operation modes according to the control signal to set the pair of shutter glasses 910, such that the pair of shutter glasses 910 is suitable for viewing image light output generated by the display apparatus 930. In this exemplary embodiment, the control panel 902 shown in FIG. 10 may be removed from the transmitter 900 without affecting the operation of the present invention.

In another exemplary embodiment of the present invention, the transmitter 900 may actively request the display apparatus 930 for related information of the display apparatus. For example, the display apparatus 930 may display an on-screen display (OSD) shown in FIG. 9 for allowing the user to determine how to set the operation mode of the pair of shutter glasses 910. If the user selects "auto setting" in the OSD, the display apparatus 930 actively transmits related information of the display apparatus (e.g. polarization direction of image light) or a corresponding value of the display apparatus (e.g. value=1) to the transmitter 900. Next, the transmitter 900 generates a control signal by searching the look-up table or using other manners according to the related information of the display apparatus or the corresponding value, and transmits the control signal to the pair of shutter glasses 910, such that the control chip in the pair of shutter glasses 910 is configured to select one of the operation modes according to the control signal to set the pair of shutter glasses 910. If the user selects "manual switching mode" in the OSD, the OSD will further display more options for the user, meanwhile, the user may freely select one of the options that may allow the user to perceive image light with highest brightness via the pair of shutter glasses 910 to act as a best operation mode of the pair of shutter glasses 910. In this exemplary embodiment, the control panel 902 shown in FIG. 10 may be removed from the transmitter 900 without affecting the operation of the present invention.

In another exemplary embodiment of the present invention, if the display apparatus 930 and the transmitter 900 are particularly designed (e.g., the transmitter 900 and the display apparatus 930 are both designed by the same manufacturer), the transmitter 900 does not need to analyze the type of the display apparatus 930 or related information of polarization direction of image light. The transmitter 900 may generate a control signal by searching a look-up table or other manners only according to one or more corresponding values from the display apparatus 930 (e.g., when the corresponding value=0, the type of the display apparatus is #1; when the corresponding value=1, the type of the display apparatus is #2, and so forth), and transmits the control signal to the pair of shutter glasses 910. Therefore, a control chip in the pair of shutter glasses 910 is configured to select one of the operation modes according to the control signal to set the pair of shutter glasses 910, such that the pair of shutter glasses 910 is suitable for watching image light output generated by the display apparatus 930. In this exemplary embodiment, the control panel 902 shown in FIG. 10 may be removed from the transmitter 900 without affecting the operation of the present invention.

In another exemplary embodiment of the present invention, after the transmitter 900 is initially connected to the display apparatus 930, the display apparatus 930 actively transmits related information of the display apparatus (e.g. polarization direction of the image light) or a corresponding value (e.g. value=1) of the display apparatus to the transmitter 900. Next, the transmitter 900 generates a control signal by searching the look-up table or using other manners according to the related information of the display apparatus or the corresponding value, and transmits the control signal to the pair of shutter glasses 910. Therefore, the control chip in the pair of shutter glasses 910 is configured to select one of the operation modes according to the control signal to set the pair of shutter glasses 910, such that the pair of shutter glasses 910 is suitable for watching image light output generated by the display apparatus 930. In this exemplary embodiment, the control panel 902 shown in FIG. 10 may be removed from the transmitter 900 without affecting the operation of the present invention.

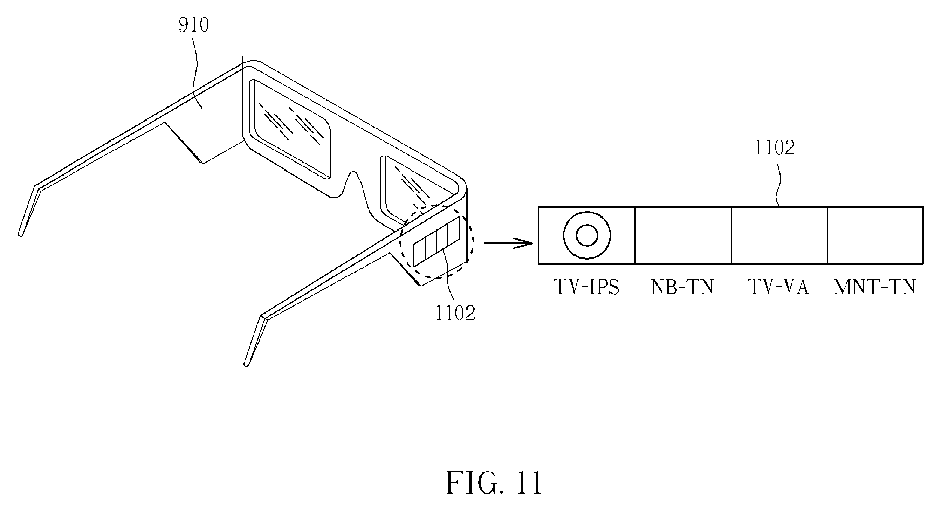

In the aforementioned exemplary embodiments shown in FIG. 9 and FIG. 10, the pair of shutter glasses 910 determines the operation mode according to the signal generated from the transmitter 900. However, in other exemplary embodiments of the present invention, the user may control the operation mode directly and manually, i.e., the control applied to the operation mode of the pair of glasses is independent of the transmitter. Please refer to FIG. 11, which is a diagram illustrating a pair of shutter glasses 900 according to another exemplary embodiment of the present invention. As shown in FIG. 11, the pair of shutter glasses 910 includes a control panel 1102 having four operation modes TV-IPS, NB-TN, TV-VA and MNT-TN respectively for watching a television (TV) screen using an in-plane switching (IPS) LC panel, a notebook screen using a twist nematic (TN) LC panel, a TV screen using a vertical alignment (VA) LC panel, and a monitor using a TN LC panel. The control chip (not shown) in the pair of shutter glasses 910 is configured to select one of the operation modes according to a user input from the control panel 1102 to set the pair of shutter glasses 910. Similarly, the control panel 1102 may also allow the user to manually control the driving manner of the pair of shutter glasses 910 (i.e., on/off switching modes such as on/off time lengths, on/off cycles, on/off times, on/off ratios, etc). Besides, it should be noted that the control panel 1102 mentioned above is for illustrative purposes only. In other exemplary embodiment of the present invention, the control panel may be any control panel which is capable of allowing the user to select an operation mode of the pair of shutter glasses 910.

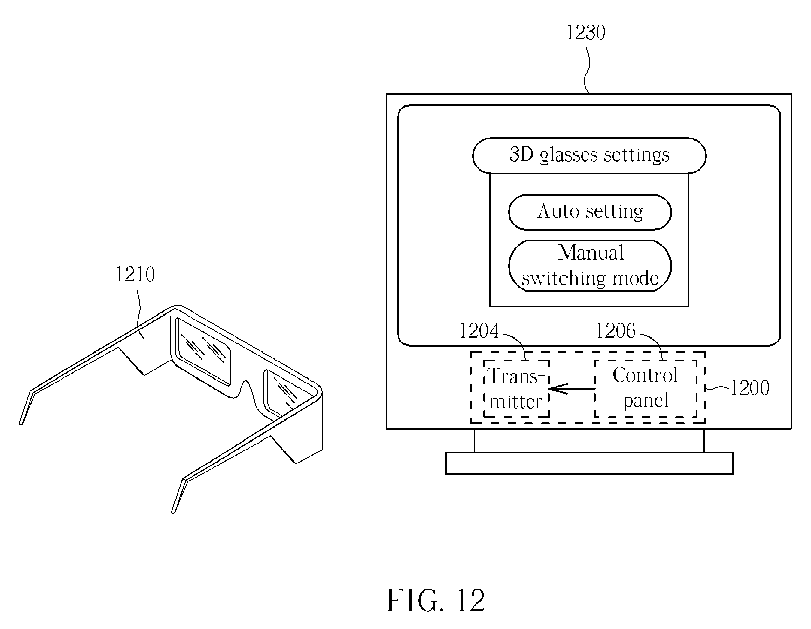

Please refer to FIG. 12, which is a diagram illustrating a control system 1200 for controlling a pair of shutter glasses 1210 according to an exemplary embodiment of the present invention. As shown in FIG. 12, the control system 1200 is disposed in a display apparatus 1230, and the control system 1200 includes a transmitter 1204 and a control panel 1206. Moreover, the pair of shutter glasses 1210 has a plurality of operation modes respectively corresponding to a plurality of types of display apparatuses. That is, the pair of shutter glasses 1210 may be the pair of shutter glasses 200 shown in FIG. 2, the pair of shutter glasses 500 shown in FIG. 5, the pair of shutter glasses 800 shown in FIG. 8, or any other pair of glasses capable of adjusting the polarization direction. Moreover, the control panel 1206 is an optional component, i.e., in some exemplary embodiments illustrated below, the control panel 1206 may be removed from the system 1200 without affecting the operation of the present invention. In the description below, only the operation modes respectively corresponding to a plurality of types of display apparatuses whose image light outputs have different polarization directions are illustrated.

Regarding the operation of the system 1200, the transmitter 1204 may generate a control signal by searching the look-up table or using other manners according to a user input from the control panel 1206, and the transmitter 1204 transmits the control signal to the pair of shutter glasses 1210 via infrared transmission, wireless transmission, ZigBee transmission, WiFi transmission, Bluetooth transmission, ultrawideband (UWB) transmission, DLP light signal transmission, etc. A control chip (not shown) in the pair of shutter glasses 1210 is configured to select one of the operation modes according to the information carried by the control signal to set the pair of shutter glasses 1210, such that the pair of shutter glasses 1210 is suitable for viewing image light output generated by the display apparatus 1230.

In another exemplary embodiment of the present invention, the display apparatus 1230 may display an on-screen display (OSD) shown in FIG. 12 for allowing the user to determine how to set the operation mode of the pair of shutter glasses 1210. If the user selects "auto setting" in the OSD, the display apparatus 1230 actively transmits related information of the display apparatus (e.g. polarization direction of image light) or a corresponding value of the display apparatus (e.g. value=1) to the transmitter 1204. Next, the transmitter 1204 generates a control signal by searching the look-up table or using other manners according to the related information of the display apparatus or the corresponding value, and transmits the control signal to the pair of shutter glasses 1210. In this way, the control chip in the pair of shutter glasses 1210 is configured to select one of the operation modes according to the control signal to set the pair of shutter glasses 1210. If the user selects "manual switching mode" in the OSD, the OSD will further display more options for the user, meanwhile, the user may freely select one from the options that may allow the user to perceive image light with highest brightness via the pair of shutter glasses 1230 to act as a best operation mode of the pair of shutter glasses 1210. In this exemplary embodiment, the control panel 1206 shown in FIG. 12 may be removed from the system 1200 without affecting the operation of the present invention.

Besides, in another exemplary embodiment of the present invention, the designer may load a special wireless electronic signal (e.g., an infrared signal, a wireless signal, a ZigBee signal, a WiFi signal, a Bluetooth signal, a ultrawideband (UWB) signal, a DLP light signal, etc.) on the display apparatus 1230 in advance, and the transmitter 1204 may continuously transmit the special wireless electronic signal or transmit the specific wireless electronic signal only when the 3D mode is enabled or set. The pair of shutter glasses 1210 may directly receive the special wireless electronic signal and analyze it. For example, a control chip (not shown) in the pair of shutter glasses 1210 is configured to determine the type of the special wireless electronic signal (i.e., determine that the special wireless electronic signal belongs to which one of infrared signal, wireless signal, ZigBee signal, WiFi signal, Bluetooth signal, etc.) and identify the value carried by the special wireless electronic signal to recognize the type of the display apparatus (e.g., when the value is 1, it implies that the display apparatus is a TV screen, and when the value is 0, it implies that the display apparatus is a notebook screen), and select at least one of the on/off time lengths, on/off cycles, on/off times, on/off ratios for controlling the on/off manner applied to the shutter lenses of the pair of shutter glasses 1210.

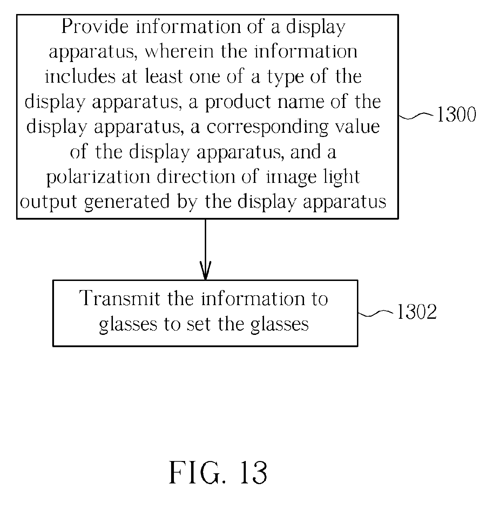

Please refer to FIG. 13, which is a flowchart illustrating a method for controlling a pair of shutter glasses according to an exemplary embodiment of the present invention. With reference to FIG. 13, the flow is detailed as below:
Step 1300: Provide information of a display apparatus, wherein the information includes at least one of a type of the display apparatus, a product name of the display apparatus, a corresponding value of the display apparatus, and a polarization direction of image light output generated by the display apparatus.
Step 1302: Transmit the information to the pair of glasses to set the pair of glasses.

Moreover, it should be noted that the content illustrated above is directed to adjusting a polarization direction for viewing images under a 3D mode. However, by utilizing this method (i.e., changing the polarization direction), the pair of glasses may also be utilized under a two-dimensional (2D) mode. That is, in a case where user's left eye and right eye both see the same left-eye image/right-eye image under a 2D mode, changing the polarization direction may be employed.

In brief conclusion of the present invention, the pair of shutter glasses of the present invention may select one of a plurality of operation modes according to a type of the display apparatus to set the pair of glasses, wherein the operation modes respectively correspond to a plurality of different types of display apparatuses. So, manufacturers do not have to redesign the pair of 3D glasses according to each display apparatus type, and the production cost is saved accordingly. Besides, one user only needs to buy one pair of 3D glasses suitable for viewing a plurality of types of display apparatuses, which prevents the user from spending extra money on buying the pair of shutter glasses.

For completeness, various aspects of the invention are set out in the following numbered clauses.
Clause 1: A pair of shutter glasses, comprising:
   a frame;
   two shutter lenses, disposed on the frame; and
   a control chip, for generating a control signal by selecting one of a plurality of operation modes according to a type of a display apparatus, and setting the shutter glasses according to the control signal, wherein the operation modes respectively correspond to a plurality of different types of display apparatuses.
Clause 2: The pair of shutter glasses of Clause 1, wherein each of the two shutter lenses comprises at least a polarizer and a liquid crystal layer, and the control chip is configured to generate the control signal for controlling the two shutter lenses such that a polarization angle of the two shutter lenses is able to satisfy a polarization direction of an image light output generated by the display apparatus.
Clause 3: The pair of shutter glasses of Clause 2, wherein the operation modes are a plurality of voltage values, and the control chip is configured to select one of the voltage values according to the polarization direction of the image light output generated by the display apparatus, and to utilize a selected voltage value as a voltage applied to the liquid crystal layer of each of the two shutter lenses.
Clause 4: The pair of shutter glasses of Clause 3, wherein the voltage values respectively correspond to a plurality of different types of display apparatuses whose image light outputs have different polarization directions.
Clause 5: The pair of shutter glasses of Clause 1, wherein the operation modes are a plurality of on/off frequencies, and the control chip is configured to select one of the on/off frequencies according to the type of the display apparatus for controlling on/off statuses of the two shutter lenses.
Clause 6: The pair of shutter glasses of Clause 1, wherein the control chip is configured to determine the type of the display apparatus according to a type of a signal received from a transmitter, and generate the control signal according to the type of the display apparatus.
Clause 7: The pair of shutter glasses of Clause 1, wherein the operation modes are a plurality of on/off time lengths for controlling the two shutter lenses, and the control chip is configured to select one of the on/off time lengths according to the type of the display apparatus for controlling on/off statuses of the two shutter lenses.
Clause 8: The pair of shutter glasses of Clause 1, further comprising:
   a control panel, disposed on the frame and coupled to the control chip, wherein the control chip is configured to select one of the operation modes according to a user input from the control panel for setting the shutter glasses.
Clause 9: The pair of shutter glasses of Clause 1, wherein the control chip is configured to select one of the operation modes according to an input from an external transmitter for setting the shutter glasses.
Clause 10: A control system for controlling a pair of shutter glasses, comprising:
   a transmitter, disposed in a display apparatus, for transmitting information of the display apparatus to the pair of shutter glasses to set the shutter glasses, wherein the information comprises at least one of a type of the display apparatus, a product name of the display apparatus, a corresponding value of the display apparatus, and a polarization direction of an image light output generated by the display apparatus.
Clause 11: The control system of Clause 10, further comprising:
   a control panel, disposed in the display apparatus and coupled to the transmitter; wherein the transmitter is configured to transmit the information to the pair of shutter glasses according to a user input from the control panel.
Clause 12: The control system of Clause 10, wherein the transmitter is configured to transmit the information to the shutter glasses according to a user input of an on-screen display (OSD) of the display apparatus.
Clause 13: A method for controlling a pair of shutter glasses, comprising:
   providing information of a display apparatus, wherein the information comprises at least one of a type of the display apparatus, a product name of the display apparatus, a corresponding value of the display apparatus, and a polarization direction of an image light output generated by the display apparatus; and
   transmitting the information to the shutter glasses for setting the shutter glasses.
Clause 14: The method of Clause 13, wherein the step of transmitting the information to the pair of shutter glasses comprises:
   transmitting the information to the pair of shutter glasses according to a user input from a control panel of the display apparatus.
Clause 15: The method of Clause 13, wherein the step of transmitting the information to the pair of shutter glasses comprises:
   transmitting the information to the pair of shutter glasses according to a user input of an on-screen display (OSD) of the display apparatus.
Clause 16: A transmitter, comprising:
   an interface circuit, for receiving information of a display apparatus;
   a control unit, coupled to the interface circuit, for generating a control signal according to the information, wherein the control signal is utilized for setting a pair of shutter glasses to select one of a plurality of operation modes; and
   a transmitting unit, coupled to the control unit, for transmitting the control signal to the pair of shutter glasses.
Clause 17: The transmitter of Clause 16, wherein the information comprises at least one of a type of the display apparatus, a product name of the display apparatus, a corresponding value of the display apparatus, and a polarization direction of an image light output generated by the display apparatus.
Clause 18: The transmitter of Clause 16, wherein the control unit is configured to generate the control signal by searching a look-up table according to the information.

## Claims

1. A pair of shutter glasses for viewing a plurality of different types of display apparatuses whose image light outputs have different polarization directions, comprising:
a frame (210, 510, 810);
two shutter lenses (220_1, 220_2, 520_1, 520_2), disposed on the frame (210, 510, 810); and
a control chip (240. 540), 840), configured to generate a control signal by selecting one of a plurality of operation modes of the shutter glasses (200, 500, 800, 910, 1210) according to the type or information of the display apparatus (930, 1230) and to set the shutter glasses (200, 500, 800, 910, 1210) according to the control signal, wherein the operation modes respectively correspond to a plurality of different types of display apparatuses and **characterized in that** the operation modes are a plurality of voltage values, and the control chip (240, 540, 840) is configured to select one of the voltage values according to the polarization direction of an image light generated by said one of the types of display apparatuses (930. 1230), wherein the polarization direction is according to the type of display apparatus (930, 1230), and the voltage values respectively correspond to a plurality of different types of display apparatuses whose image light outputs have different polarization directions.

2. The pair of shutter glasses (200. 500, 800, 910, 1210) of claim 1, **characterized in that** each of the two shutter lenses (220_1, 220_2, 520_1, 520_2) comprises at least a polarizer (340, 660) and a liquid crystal layer (320, 620, 640), and the control chip (240, 540), 840) is configured to generate the control signal for controlling the two shutter lenses (220_1, 220_2, 520_1, 520_2) according to the selected voltage value such that a rotation degree of light within the liquid crystal layer (320, 620, 640) of the two shutter lenses (220_1, 220_2, 520_1, 520_2) corresponds to a polarization direction of the image light output generated by the display apparatus (930. 1230) such that the image light is either totally transmitted or totally blocked by the polarizer (340, 660).

3. The pair of shutter glasses (200, 500, 800, 910, 1210) of claim 2, **characterized in that** the control chip (240, 540. 840) utilizes a selected voltage value as voltages applied to the liquid crystal layer of each of the two shutter lenses (220_1, 220_2, 520_1, 520_2).

4. The pair of shutter glasses (200, 500, 800, 910, 1210) of claim 1, **characterized in that** the control chip (240, 540), 840) is configured to determine the type or information of the display apparatus (930, 1230) according to a type of a signal received from a transmitter (900, 1204), and generate the control signal according to the type of the display apparatus (930, 1230),

5. The pair of shutter glasses (200, 500, 80, 910, 1210) of claim 4, wherein the transmitter (900, 1204) is **characterized by**:
an interface circuit (906), for receiving information of the display apparatus (930, 1230);
a control unit (904), coupled to the interface circuit (906), for generating the control signal according to the information; and
a transmitting unit (908), coupled to the control unit (904), for transmitting the control signal to the pair of shutter glasses (200, 500, 800, 910, 1210).

6. The pair of shutter glasses (200, 500, 80, 910, 1210) of claim 5, wherein the transmitter (900, 1204) is **characterized in that** the information comprises at least one of a type of the display apparatus (930, 1230), a product name of the display apparatus (930, 1230), a corresponding value of the display apparatus (930, 1230), and a polarization direction of an image light output generated by the display apparatus (930, 1230).

7. The pair of shutter glasses (200, 500, 80, 910, 1210) of claim 5, wherein the transmitter (900, 1204) is **characterized in that** the control unit (904) is configured to generate the control signal by searching a look-up table according to the information.

8. The pair of shutter glasses (200, 500, 800, 910, 1210) of claim 1, further **characterized by**:
a control panel (902, 1102, 1206), disposed on the frame (210, 510, 810) and coupled to the control chip (240, 540), 840), wherein the control chip (240, 540), 840) is configured to select one of the operation modes according to a user input from the control panel for setting the shutter glasses (200, 500, 800, 910, 1210).

9. The pair of shutter glasses (200, 500, 800, 910, 1210) of claim 1, **characterized in that** the control chip (240, 540), 840) is configured to select one of the operation modes according to an input from an external transmitter (900, 1204) for setting the shutter glasses (200, 500, 800, 910, 1210).

10. A method for controlling a pair of shutter glasses (200, 500, 800, 910, 1210), comprising:
providing information of a display apparatus (930, 1230), wherein the information comprises at least one of a type of the display apparatus (930, 1230), a product name of the display apparatus (930, 1230), a corresponding value of the display apparatus (930, 1230), and a polarization direction of an image light output generated by the display apparatus (930, 1230);
transmitting the information to the shutter glasses (200, 500, 800, 910, 1210) for generating a control signal to set the shutter glasses (200, 500, 800, 910, 1210); and
utilizing the control signal to select one of a plurality of operation modes of the shutter glasses (200, 500, 800, 910, 1210) according to the information of the display apparatus (930. 1230);
**characterized in that** the operation modes are a plurality of voltage values, and the operation mode is selected according to the polarization direction of the image light generated by the display apparatus (930, 1230), wherein the polarization direction is according to the type of display apparatus (930, 1230), and the voltage values respectively correspond to a plurality of different types of display apparatuses whose image light outputs have different polarization directions.

11. The method of claim 10, **characterized in that** the step of transmitting the information to the pair of shutter glasses (200, 500, 800, 910, 1210) comprises:
transmitting the information to the pair of shutter glasses (200, 500, 800, 910, 1210) according to a user input from a control panel (902, 1101, 1206) of the display apparatus (930, 1230).

12. The method of claim 10, **characterized in that** the step of transmitting the information to the pair of shutter glasses (200, 500, 800, 910, 1210) comprises:
transmitting the information to the pair of shutter glasses (200, 500, 800, 910, 1210) according to a user input of an on-screen display (USD) of the display apparatus (930, 1230).

## Patentansprüche

1. Synchronbrille (200, 500, 800, 910, 1210), zum Betrachten unterschiedlicher Anzeigevorrichtungs-Typen, deren Lichtbild-Ausgaben unterschiedliche Polarisationsrichtungen aufweisen, welche umfasst:
einen Rahmen (210, 510, 810);
zwei Synchronbrillen-Gläser (220_1), 220_2, 520_1, 520_2), die auf dem Rahmen (210, 510, 810) angeordnet sind; und
ein Steuer-Chip (240, 540), 840), der ausgestaltet ist, durch Auswählen einer von mehreren Betriebsmodi der Synchronbrillen-Gläser (200, 500, 800, 910, 1210) gemäß dem Typ oder der Information der Anzeigevorrichtung (930, 1230) ein Steuersignal zu erzeugen, und die Synchronbrillen-Gläser (200, 500, 800, 910, 1210) in Abhängigkeit von dem Steuersignal einzustellen, worin die Betriebs-Modi jeweils mehreren unterschiedlichen Anzeigevorrichtungs-Typen entsprechen und **dadurch gekennzeichnet sind, dass** die Betriebs-Modi mehrere Spannungswerte sind, und der Steuer-Chip (240, 540, 840) ausgestaltet ist, einen der Spannungs-Werte gemäß einer Polarisationsrichtung eines durch die Anzeigevorrichtung (930, 1230) erzeugten Lichtbildes zu wählen, worin die Polarisationsrichtung gemäß dem Anzeigevorrichtungs-Typ (930, 1230) ist, und die Spannungs-Werte jeweils mehreren unterschiedlichen Anzeigevorrichtungs-Typen entsprechen, deren Lichtbild-Ausgaben unterschiedliche Polarisationsrichtungen aufweisen.

2. Synchronbrille (200, 500, 800, 910, 1210) nach Anspruch 1, **dadurch gekennzeichnet, dass** jede der zwei Synchronbrillen-Gläser (220_1, 220_2, 520_1, 520_2) mindestens einen Polarisator (340, 660) und eine Flüssigkristall-Schicht (320, 620, 640) umfasst, und dass der Steuer-Chip (240, 540), 840) ausgestaltet ist, das Steuersignal zur Steuerung der zwei Synchronbrillen-Gläser (220_1, 220_2, 520_1, 520_2) in Abhängigkeit von dem gewählten Spannungs-Wert zu erzeugen, so dass ein Rotationswinkel des Lichts in der Flüssigkristall-Schicht (320, 620, 640) der zwei Synchronbrillen-Gläser (220_1, 220_2, 520_1, 520_2) einer Polarisationsrichtung der von der Anzeigevorrichtung (930, 1230) erzeugten Lichtbild-Ausgabe entspricht, so dass das Lichtbild von dem Polarisator (340, 360) entweder vollständig durchgelassen oder vollständig blockiert wird.

3. Synchronbrille (200, 500, 800, 910, 1210) nach Anspruch 2, **dadurch gekennzeichnet, dass** der Steuer-Chip (240, 540, 840) einen gewählten Spannungs-Wert als an die Flüssigkristall-Schicht eines jeden der zwei Synchronbrillen-Gläser (220_1, 220_2, 520_1, 520_2) angelegte Spannung verwendet.

4. Synchronbrille (200, 500, 800, 910, 1210) nach Anspruch 1, **dadurch gekennzeichnet, dass** der Steuer-Chip (240, 540), 840) ausgestaltet ist, den Typ oder die Information der Anzeigevorrichtung (930, 1230) gemäß einem Signaltyp zu bestimmen, das von einem Transmitter (900, 1204) erhalten wurde, und das Steuersignal gemäß dem Typ der Anzeigevorrichtung (930, 1230) zu erzeugen.

5. Synchronbrille (200, 500, 80, 910, 1210) nach Anspruch 4, worin der Transmitter (900, 1204) **gekennzeichnet ist durch**:
einen Schnittstellen-Schaltkreis (906) zum Empfangen von Informationen von der Anzeigevorrichtung (930, 1230);
eine Steuer-Einheit (904), die mit dem Schnittstellen-Schaltkreis (906) gekoppelt ist, um das Steuersignal gemäß der Information zu erzeugen; und
eine Übertragungseinheit (908), die mit der Steuereinheit (904) gekoppelt ist, um das Steuersignal zu der Synchronbrille (200, 500, 800, 910, 1210) zu übertragen.

6. Synchronbrille (200, 500, 80, 910, 1210) nach Anspruch 5, **dadurch gekennzeichnet, dass** die Information mindestens einen von einem Anzeigevorrichtungs-Typ (930, 1230), einem Produktnamen der Anzeigevorrichtung (930, 1230), einem entsprechenden Wert der Anzeigevorrichtung (930, 1230), und einer Polarisationsrichtung einer Lichtbild-Ausgabe, die von der Anzeigevorrichtung (930, 1230) erzeugt wurde, umfasst.

7. Synchronbrille (200, 500, 80, 910, 1210) nach Anspruch 5, worin der Transmitter (900, 1204) **dadurch gekennzeichnet ist, dass** die Steuereinheit (904) ausgestaltet ist, das Steuersignal mittels Durchsuchen einer Nachschlagetabelle gemäß der Information zu erzeugen.

8. Synchronbrille (200, 500, 800, 910, 1210) nach Anspruch 1, weiter **gekennzeichnet durch** : ein Steuerpaneel (902, 1102, 1206), das an dem Rahmen (210, 510, 810) angebracht und mit dem Steuer-Chip (240, 540), 840) gekoppelt ist, worin der Steuer-Chip (240, 540) 840) ausgestaltet ist, eine der Betriebs-Modi gemäß einer Eingabe eines Nutzers an dem Steuer-Paneel zu wählen, um die Synchronbrillen-Gläser (200, 500, 800, 910, 1210) einzustellen.

9. Synchronbrille (200, 500, 800, 910, 1210) nach Anspruch 1, **dadurch gekennzeichnet, dass** der Steuer-Chip (240, 540), 840) ausgestaltet ist, eine der Betriebs-Modi gemäß einer Eingabe von einem externen Transmitter (900, 1204) auszuwählen, um die Synchronbrillen-Gläser (200, 500, 800, 910, 1210) einzustellen.

10. Verfahren zur Steuerung einer Synchronbrille (200, 500, 800, 910, 1210), welches umfasst:
Bereitstellen von Information einer Anzeigevorrichtung (930, 1230), worin die Information mindestens einen von einem Typ der Anzeigevorrichtung (930, 1230), einem Produktnamen der Anzeigevorrichtung (930, 1230), einem entsprechenden Wert der Anzeigevorrichtung (930, 1230), und einer Polarisationsrichtung einer Lichtbildausgabe, die von der Anzeigevorrichtung (930, 1230) erzeugt wurde, umfasst;
Übertragen der Information zu den Synchronbrillen-Gläsern (200, 500, 800, 910, 1210) zur Erzeugung eines Steuersignals, um die Synchronbrillen-Gläser (200, 500, 800, 910, 1210) einzustellen; und
Verwenden des Steuersignals, um eine von mehreren Betriebs-Modi der Synchronbrillen-Gläser (200, 500, 800, 910, 1210) gemäß der Information der Anzeigevorrichtung (930, 1230) auszuwählen;
**dadurch gekennzeichnet, dass** die Betriebs-Modi mehrere Spannungs-Werte sind, und dass der Betriebs-Modus gemäß der Polarisationsrichtung des Lichtbilds, das von der Anzeigevorrichtung (930, 1230) erzeugt wird, gewählt wird, worin die Polarisationsrichtung gemäß dem Anzeigevorrichtungs-Typ (930, 1230) ist, und worin die Spannungs-Werte jeweils mehreren verschiedenen Anzeigevorrichtungs-Typen entsprechen, deren Lichtbild-Ausgaben verschiedene Polarisationsrichtungen aufweisen.

11. Verfahren nach Anspruch 10, **dadurch gekennzeichnet, dass** der Schritt der Übertragung der Information zu der Synchronbrille (200, 500, 800, 910, 1210) umfasst:
Übertragen der Information zu der Synchronbrille (200, 500, 800, 910, 1210) gemäß einer Nutzer-Eingabe über ein Steuer-Paneel (902, 1101, 1206) der Anzeigevorrichtung (930, 1230).

12. Verfahren nach Anspruch 10, **dadurch gekennzeichnet, dass** der Schritt der Übertragung der Information zu der Synchronbrille (200, 500, 800, 910, 1210) umfasst:
Übertragen der Information zu der Synchronbrille (200, 500, 800, 910, 1210) gemäß einer Nutzer-Eingabe einer Bildschirm-Anzeige (OSD) der Anzeigevorrichtung (930, 1230).

## Revendications

1. Paire de lunettes à obturation pour regarder une pluralité de différents types d'appareils d'affichage dont les rendements lumineux d'image ont différentes directions de polarisation, comprenant :
un cadre (210, 510, 810) ;
deux lentilles à obturation (220_1, 220_2, 520_1, 520_2) disposées sur le cadre (210, 510, 810) ; et une puce de commande (240, 540, 840) configurée pour générer un signal de commande en sélectionnant un d'une pluralité de modes opérationnels des lunettes à obturation (200, 500, 800, 910, 1210) selon le type ou les informations de l'appareil d'affichage (930, 1230) et pour régler les lunettes à obturation (200, 500, 800, 910, 1210) selon le signal de commande, dans laquelle les modes opérationnels correspondent respectivement à une pluralité de différents types d'appareils d'affichage, et **caractérisée en ce que** les modes opérationnels sont une pluralité de valeurs de tension, et la puce de commande (240, 540, 840) est configurée pour sélectionner une des valeurs de tension selon la direction de polarisation d'une image lumineuse générée par ledit un des types d'appareils d'affichage (930, 1230), dans laquelle la direction de polarisation est selon le type d'appareil d'affichage (930, 1230) et les valeurs de tension correspondent respectivement à une pluralité de différents types d'appareils d'affichage dont les rendements lumineux d'image ont différentes directions de polarisation.

2. Paire de lunettes à obturation (200, 500, 800, 910, 1210) selon la revendication 1, **caractérisée en ce que** chacune des deux lentilles à obturation (220_1, 220_2, 520_1, 520_2) comprend au moins un polariseur (340, 660) et une couche de cristaux liquide (320, 620, 640), et la puce de commande (240, 540, 840) est configurée pour générer le signal de commande pour commander les deux lentilles à obturation (220_1, 220_2, 520_1, 520_2) selon la valeur de tension sélectionnée de telle façon qu'un degré de rotation de la lumière à l'intérieur de la couche de cristaux liquide (320, 620, 640) des deux lentilles à obturation (220_1, 220_2, 520_1, 520_2) corresponde à une direction de polarisation du rendement lumineux d'image généré par l'appareil d'affichage (930, 1230) de telle façon que la lumière d'image est, soit transmise en totalité, soit bloquée en totalité par le polariseur (340, 660).

3. Paire de lunettes à obturation (200, 500, 800, 910, 1210) selon la revendication 2, **caractérisée en ce que** la puce de commande (240, 540, 840) utilise une valeur de tension sélectionnée en tant que tensions appliquées sur la couche de cristaux liquides de chacune des deux lentilles à obturation (220_1, 220_2, 520_1, 520_2).

4. Paire de lunettes à obturation (200, 500, 800, 910, 1210) selon la revendication 1, **caractérisée en ce que** la puce de commande (240, 540, 840) est configurée pour déterminer le type ou les informations de l'appareil d'affichage (930, 1230) selon un type d'un signal reçu d'un émetteur (900, 1204) et génère le signal de commande selon le type de l'appareil d'affichage (930, 2230).

5. Paire de lunettes à obturation (200, 500, 800, 910, 1210) selon la revendication 4, dans laquelle l'émetteur (900, 1204) est **caractérisé par** :
un circuit d'interface (906) pour recevoir des informations de l'appareil d'affichage (930, 1230) ;
une unité de commande (904), couplée au circuit d'interface (906) pour générer le signal de commande selon les informations ; et
une unité de transmission (908) couplée à l'unité de commande (904) pour transmettre le signal de commande à la paire de lunettes à obturation (200, 500, 800, 910, 1210).

6. Paire de lunettes à obturation (200, 500, 800, 910, 1210) selon la revendication 5, dans laquelle l'émetteur (900, 1204) est **caractérisé en ce que** les informations comprennent au moins un d'un type de l'appareil d'affichage (930, 1230), d'un nom de produit de l'appareil d'affichage (930, 1230), d'une valeur correspondante de l'appareil d'affichage (930, 1230) et d'une direction de polarisation d'un rendement lumineux d'image généré par l'appareil d'affichage (930, 1230).

7. Paire de lunettes à obturation (200, 500, 800, 910, 1210) selon la revendication 5, dans laquelle l'émetteur (900, 1204) est **caractérisé en ce que** l'unité de commande (904) est configurée pour générer le signal de commande en cherchant une table de recherche selon les informations.

8. Paire de lunettes à obturation (200, 500, 800, 910, 1210) selon la revendication 1, **caractérisée en outre par** :
un panneau de commande (902, 1102, 1206), disposé sur le cadre (210, 510, 810) et couplé à la puce de commande (240, 540, 840), dans laquelle la puce de commande (240, 540, 840) est configurée pour sélectionner un des modes opérationnels selon une entrée d'utilisateur à partir du panneau de commande pour régler les lunettes à obturation (200, 500, 800, 910, 1210).

9. Paire de lunettes à obturation (200, 500, 800, 910, 1210) selon la revendication 1, **caractérisée en ce que** la puce de commande (240, 540, 840) est configurée pour sélectionner un des modes opérationnels selon une entrée d'un émetteur externe (900, 1204) pour régler les lunettes à obturation (200, 500, 800, 910, 1210).

10. Procédé pour commander une paire de lunettes à obturation (200, 500, 800, 910, 1210), comprenant :
la fourniture d'informations d'un appareil d'affichage (930, 1230), dans lequel les informations comprennent au moins un d'un type de l'appareil d'affichage (930, 1230), d'un nom de produit de l'appareil d'affichage (930, 1230), d'une valeur correspondante de l'appareil d'affichage (930, 1230) et d'une direction de polarisation d'un rendement lumineux d'image généré par l'appareil d'affichage (930, 1230) ;
la transmission des informations aux lunettes à obturation (200, 500, 800, 910, 1210) pour générer un signal de commande pour régler les lunettes à obturation (200, 500, 800, 910, 1210) ; et
l'utilisation du signal de commande pour sélectionner un de la pluralité de modes opérationnels des lunettes à obturation (200, 500, 800, 910, 1210) selon les informations de l'appareil d'affichage (930, 1230) ;
**caractérisé en ce que** les modes opérationnels sont une pluralité de valeurs de tension, et le mode opérationnel est sélectionné selon la direction de polarisation de la lumière d'image générée par l'appareil d'affichage (930, 1230), dans lequel la direction de polarisation est selon le type d'appareil d'affichage (930, 1230), et les valeurs de tension correspondent respectivement à une pluralité de différents types d'appareils d'affichage dont les rendements lumineux d'image ont différentes directions de polarisation.

11. Procédé selon la revendication 10, **caractérisé en ce que** l'étape de transmission des informations à la paire de lunettes à obturation (200, 500, 800, 910, 1210) comprend :
la transmission des informations à la paire de lunettes à obturation (200, 500, 800, 910, 1210) selon une entrée d'utilisateur à partir d'un panneau de commande (902, 1101, 1206) de l'appareil d'affichage (930, 1230).

12. Procédé selon la revendication 10, **caractérisé en ce que** l'étape de transmission des informations à la paire de lunettes à obturation (200, 500, 800, 910, 1210) comprend :
la transmission des informations à la paire de lunettes à obturation (200, 500, 800, 910, 1210) selon une entrée d'utilisateur d'un affichage à l'écran (OSD) de l'appareil d'affichage (930, 1230).
